# EUROPÄISCHE PATENTANMELDUNG

(11) **EP 4 775 034 A2**
(43) Veröffentlichungstag der Anmeldung: **15.07.2026**
(21) Anmeldenummer: 26166426.2
(22) Anmeldetag: 01.02.2021
(51) Int. Cl.: A01N 37/42

(54) **VERFAHREN ZUM VERBESSERN DER STANDFESTIGKEIT EINER KULTURPFLANZE**

(30) Priorität: 04.02.2020 DE 102020102829
(62) Teilanmeldung aus: 21702976.8
(71) Anmelder: Omnicult Farmconcept GmbH, 65549 Limburg (DE)
(72) Erfinder: FISCHER, Marc, 65597 Hünfelden (DE); SCHMIDT, Hartmut Manfred, 44892 Bochum (DE)
(74) Vertreter: WSL Patentanwälte Partnerschaft mbB

(57) **Zusammenfassung**

Um beim landwirtschaftlichen Anbau von Kulturpflanzen die Mengen an Wachstumsregler, die bei einem konventionellen Anwendungsplan ausgebracht werden, reduzieren zu können, wird erfindungsgemäß ein Verfahren zum Verbessern der Standfestigkeit einer Kulturpflanze vorgeschlagen, bei dem die folgenden Schritte ausgeführt werden:
Bestimmen eines konventionellen Anwendungsplans, welcher umfasst
- eine erste Menge pro Ackerflächeneinheit eines ersten Wachstumsreglers für eine erste Spritzung der Kulturpflanze und
- einen Zeitpunkt für die erste Spritzung,

Modifizieren des konventionellen Anwendungsplans, um einen modifizierten Anwendungsplan zu erhalten, wobei der modifizierte Anwendungsplan umfasst
- eine zweite Menge pro Ackerflächeneinheit des ersten Wachstumsreglers für die erste Spritzung, wobei die zweite Menge pro Ackerflächeneinheit kleiner als die erste Menge pro Ackerflächeneinheit ist,
- einen Zeitpunkt für die erste Spritzung,
- eine dritte Menge pro Ackerflächeneinheit eines Silizium enthaltenden flüssigen Stoffgemischs für eine Spritzung und
- einen Zeitpunkt für die Spritzung der dritten Menge pro Ackerflächeneinheit des Silizium enthaltenden Stoffgemischs, und

Behandeln der Kulturpflanze auf der Ackerfläche nach dem modifizierten Anwendungsplan.

## Beschreibung

Die vorliegende Erfindung betrifft ein Verfahren zum Verbessern der Standfestigkeit einer Kulturpflanze auf einer Ackerfläche, wobei das Verfahren vorsieht, dass ein konventioneller Anwendungsplan, bei dem wenigstens einmal eine bestimmte Menge eines oder mehrerer Wachstumsregler zu einem oder mehreren bestimmten Zeitpunkt gespritzt wird, modifiziert wird.

Gesunde Pflanzen sind Voraussetzung für eine ertragreiche Erzeugung in der Landwirtschaft, denn der Befall von Kulturpflanzen mit phytopathogenen Bakterien, Pilzen oder Viren, kann zu erheblichen Ertragseinbußen führen, ebenso wie die Schädigung durch Insektenfraß oder Fraßschäden durch andere Pflanzenschädlinge. Zum Schutz der Pflanzengesundheit werden daher vielfach Schadorganismen bekämpfende Pflanzenschutzmittel (Herbizide, Fungizide, Insektizide, Nematizide, Rodentizide) ausgebracht.

Ein wichtiges Merkmal gesunder Pflanzen ist aber auch eine hohe Standfestigkeit. Starke Windböen und Regenfälle können in Kulturpflanzenbeständen nämlich dazu führen, dass Pflanzen nester- oder streifenweise über größere Flächen hinweg umknicken ("Lager"). Besonders anfällig hierfür sind beispielsweise Getreide, Flachs, Mais, Raps und Kartoffeln.

Das Lagern führt zu einer deutlich erschwerten Ernte und zu verminderter Qualität. Moderne Mähmaschinen können lagernde Ackerfrüchte zwar teilweise noch ernten, umgefallene Pflanzen können nach der Ernte aber meist nicht mehr zu hochwertigeren Gütern verarbeitet werden und insbesondere bei Pflanzen, die bereits in einem frühen Entwicklungsstadium lagern sind teils erhebliche Ertragseinbußen festzustellen.

Zur Verbesserung der Standfestigkeit werden in der Landwirtschaft Wachstumsregler eingesetzt. Hierbei handelt es sich um Mittel die das Pflanzenwachstum beeinflussen, beispielweise indem das Streckungswachstum verringert wird, was dazu führt, dass die Pflanzen eingekürzt und die Sprosse so stabiler gemacht werden. Die meisten Wachstumsregler sind natürliche Phytohormone oder deren synthetische Analoga. Da Wachstumsregler grundlegend in die hormonelle Steuerung des Pflanzenwachstums eingreifen, kann eine Überdosierung allerdings auch negative Folgen haben.

Der Einsatz von Wachstumsreglern ist von vielen Faktoren abhängig, wie z.B. Pflanzensorte, Nährstoffversorgung, Wasserversorgung, Bodenart und Witterung. Im landwirtschaftlichen Ackerbau stellt sich dabei nicht nur die Frage, ob eine Applikation von Wachstumsreglern ertragsfördernd wirken wird, sondern auch die Frage, welche Mengen appliziert werden müssen, um die angestrebte Ertragssteigerung tatsächlich zu erzielen. Schon kleine Abweichungen vom Optimum können hier starke Auswirkungen haben.

Ein typischer konventioneller Anwendungsplan für Wachstumsregler sieht eine zweimalige Anwendung vor, indem bei einer ersten Spritzung eine bestimmte Menge an Wachstumsregler appliziert wird und bei einer zweiten Spritzung noch einmal eine bestimmte Menge an Wachstumsregler, die entweder größer, geringer oder gleich der bei der ersten Spritzung applizierten Menge sein kann.

Aus verschiedenen Gründen besteht ein Bedarf nach einem Verfahren, mit dem man die Mengen an Wachstumsregler, die bei einem konventionellen Anwendungsplan ausgebracht werden, reduzieren kann. Zum einen bedeuten geringere Mengen typischerweise auch geringere Kosten. Zum anderen ist es aus ökologischen Gründen insgesamt gewünscht, die Menge an in der Landwirtschaft eingesetzten Wachstumsreglern zu reduzieren.

Bei der Reduzierung von Wachstumsreglern muss allerdings äußerst vorsichtig vorgegangen werden. Schließlich besteht immer das Risiko, dass eine auch nur geringfügig zu starke Reduzierung zu erheblichen Ertragseinbußen oder gar zum vollständigen Ernteausfall führt.

Mit der vorliegenden Erfindung wird daher ein Verfahren zum Verbessern der Standfestigkeit einer Kulturpflanze auf einer Ackerfläche vorgeschlagen, wobei das Verfahren vorsieht, dass ein konventioneller Anwendungsplan, bei dem wenigstens einmal eine bestimmte Menge eines oder mehrerer Wachstumsregler zu einem oder mehreren bestimmten Zeitpunkten gespritzt wird, modifiziert wird.

Insbesondere wird ein Verfahren zum Verbessern der Standfestigkeit einer Kulturpflanze auf einer Ackerfläche vorgeschlagen, bei dem die folgenden Schritte ausgeführt werden:
Bestimmen eines konventionellen Anwendungsplans, welcher umfasst
   - eine erste Menge pro Ackerflächeneinheit eines ersten Wachstumsreglers für eine erste Spritzung der Kulturpflanze und
   - einen Zeitpunkt für die erste Spritzung,
Modifizieren des konventionellen Anwendungsplans, um einen modifizierten Anwendungsplan zu erhalten, wobei der modifizierte Anwendungsplan umfasst
   - eine zweite Menge pro Ackerflächeneinheit des ersten Wachstumsreglers für die erste Spritzung, wobei die zweite Menge pro Ackerflächeneinheit kleiner als die erste Menge pro Ackerflächeneinheit ist,
   - einen Zeitpunkt für die erste Spritzung,
   - eine dritte Menge pro Ackerflächeneinheit eines Silizium enthaltenden flüssigen Stoffgemischs für eine Spritzung und
   - einen Zeitpunkt für die Spritzung der dritten Menge pro Ackerflächeneinheit des Silizium enthaltenden Stoffgemischs, und
Behandeln der Kulturpflanze auf der Ackerfläche nach dem modifizierten Anwendungsplan.

Die erfindungsgemäß vorgeschlagene Modifizierung eines konventionellen Anwendungsplans führt dazu, dass die Menge an Wachstumsregler, die nach dem modifizierten Anwendungsplan eingesetzt wird, geringer als die Menge ist, die nach dem konventionellen Anwendungsplan eingesetzt werden müsste. Es können somit Anschaffungskosten für Wachstumsregler eingespart werden und die Belastung der Umwelt durch Wachstumsreglereintrag kann verringert werden.

Die vorliegende Erfindung betrifft ein Verfahren zum Verbessern der Standfestigkeit einer Kulturpflanze auf einer Ackerfläche. Der Begriff "Kulturpflanze" ist dabei so zu verstehen, dass hiervon alle in Kultur wachsenden Pflanzen erfasst werden, die einer wirtschaftlichen Nutzung zugeführt werden, und umfasst zum einen Nutzpflanzen und zum anderen Zierpflanzen.

Der Begriff "Nutzpflanze" umfasst solche Kulturpflanzen, die in der weiteren Verwertung als Nahrungsmittel, Genussmittel, Heilpflanze, Viehfutter oder für technische Zwecke (nachwachsende Rohstoffe) genutzt werden. Der Begriff "Nutzpflanze" umfasst insbesondere die typischen Feldfrüchte, die traditionell im landwirtschaftlichen Ackerbau zum Einsatz kommen, wie z.B. Getreide, Hülsenfrüchte, Hackfrüchte und Ölpflanzen, aber auch Gemüse- und Obstpflanzen.

Unter einem Verfahren zur Verbesserung der "Standfestigkeit" einer Pflanze ist zu verstehen, dass durch die Anwendung des Verfahrens die Pflanzenteile, insbesondere die Sprosse, weniger dazu neigen bei mechanischer Belastung umzuknicken oder abzubrechen. Eine verbesserte Standfestigkeit bedeutet somit eine höhere Widerstandskraft der behandelten Pflanzen gegen starke Windböen und Regenfälle. In Pflanzenbeständen mit einer verbesserten Standfestigkeit treten daher auch unter Witterungsbedingungen mit starkem Wind und Regen deutlich weniger Lager auf.

Der Begriff "Anwendungsplan" bezeichnet im Zusammenhang mit der vorliegenden Erfindung einen Plan für die Anwendung eines Wachstumsreglers auf einer auf einem Acker angebauten Pflanze, wobei der Plan zumindest die Menge des angewendeten Mittels (pro Anwendung) und die Anzahl der Anwendungen des Mittels umfasst.

Unter einem "konventionellen" Anwendungsplan sind all diejenigen Anwendungspläne zu verstehen, die herkömmlich Anwendung finden und die nicht alle Verfahrensschritte des erfindungsgemäßen modifizierten Anwendungsplanes umfassen. Dementsprechend stellt der "modifizierte" Anwendungsplan einen erfindungsgemäß abgewandelten "konventionellen" Anwendungsplan dar.

Das "Behandeln der Kulturpflanze" nach dem modifizierten Anwendungsplan bedeutet, dass die auf einer Ackerfläche angebauten Kulturpflanzen mit den im modifizierten Anwendungsplan festgelegten Maßnahmen behandelt werden. Die dabei angewendeten Mittel können auf herkömmliche Art ausgebracht werden, insbesondere durch Spritzung.

Der Begriff "Acker" bzw. die "Ackerfläche" bezeichnet hier jede Anbaufläche für eine Kulturpflanze, und eine "Ackerflächeneinheit" ist eine definierte Flächeneinheit (z.B. Quadratmeter, Ar, Hektar) des Ackers.

Die erfindungsgemäß vorgeschlagene Modifizierung eines konventionellen Anwendungsplans führt dazu, dass die zweite Menge an Wachstumsregler, die nach dem modifizierten Anwendungsplan eingesetzt wird, geringer als die erste Menge ist, die nach dem konventionellen Anwendungsplan eingesetzt werden müsste.

Bei bestimmten Ausführungsformen beträgt die zweite Menge pro Ackerflächeneinheit des ersten Wachstumsreglers 75 % oder weniger, vorzugsweise 50 % oder weniger und besonders bevorzugt 25 % oder weniger der ersten Menge pro Ackerflächeneinheit des ersten Wachstumsreglers. Bei manchen Ausführungsformen der Erfindung ist die zweite Menge pro Ackerflächeneinheit gleich Null bei anderen größer als Null.

"Wachstumsregler" im Sinne der vorliegenden Erfindung sind Mittel, die das Pflanzenwachstum beeinflussen. Hierzu zählen insbesondere natürliche Phytohormone oder deren synthetische Analoga, sowie Aktivatoren und Inhibitoren von Phytohormonen oder Stoffe, die in den pflanzlichen Phytohormon-Stoffwechsel regulierend eingreifen.

Bei bestimmten Ausführungsformen ist der Wachstumsregler ausgewählt unter wachstumsfördernden Phytohormonen (z.B. Auxine, Cytokinine und Gibberelline) oder deren synthetischen Analoga. Bei anderen Ausführungsformen ist der Wachstumsregler ausgewählt unter wachstumshemmenden Phytohormonen (z.B. Abscisinsäure und Ethylen) oder deren synthetischen Analoga.

Bei bestimmten Ausführungsformen ist der Wachstumsregler ausgewählt unter Aktivatoren und Inhibitoren von wachstumsfördernden Phytohormonen. Bei anderen Ausführungsformen ist der Wachstumsregler ausgewählt unter Aktivatoren und Inhibitoren von wachstumshemmenden Phytohormonen.

Bei bestimmten Ausführungsformen ist der Wachstumsregler ausgewählt aus einer Gruppe bestehend aus Indol-3-essigsäure (Handelsname: IAA), 4-(Indol-3-yl)buttersäure (IBA), 1-Naphthylessigsäure (Handelsname: NAA), Gibberellinsäure (Handelsname: GA), Dichlorprop (Handelsname: 2,4-DP), 2,4,5-T (2,4,5-Trichlorphenoxyessigsäure), 2,4-D (2,4-Dichlorphenoxyessigsäure), Maleinsäurehydrazid, Tecnazen, 3-CPA (3-Chlorphenoxyessigsäure), Kinetin, 6-Benzyladenin (Handelsname: BAP), Thidiazuron, Gibberellinen (z.B. GA₁, GA₃, GA₄ GA₇), Carbaryl (Handelsname: Sevin), 4-CPA (4-Chlorphenoxyessigsäure), Chlorpropham (Handelsname: CIPC), Chlormequat (z.B. Chlormequatchlorid, Handelsname: CCC), Ethephon (Ethrel), Abscisinsäure, Abscisin II, Chlorflurenol, Daminozid, Ancymidol, Mepiquat (z.B. Mepiquatchlorid), Dimethipin, Chlorphoniumchlorid, Dikegulac, Mefluidid, Ethylchlozat, Flumetralin, Brassinosteroiden, pflanzenwachstumsregulierenden Oligosacchariden, Uniconazol-P, Forchlorfenuron, Paclobutrazol, Cyanwasserstoff, Flurprimidol, Inabenfid, Phthalimid (z. B. Folpet), Trinexapac (Handelsname: Moddus), Cyclanilid, Prohexadion (z.B. Prohexadion-Calcium; Handelsname: Regalis), 1-Methylcyclopropen (Handelsname: SmartFresh), Jasmonaten, Aviglycin (Aminoethoxyvinylglycin; Handelsname: AVG), pflanzenwachstumsregulierenden Monoterpenen, Phospholipiden und Trans-2-ketonen, 1,4-Dimethylnaphthalin, 1-Decanol, 4-(Indol-3-yl)buttersäure, Bixafen, Boscalid, Difenoconazol, Ethylen, Fluoxastrobin, Fluxapyroxad, Metamitron, Metconazol, Natrium-5-nitroguaiacolat, Natrium-o-nitrophenolat, Natrium-p-nitrophenolat, Prochloraz, Prothioconazol, Pyraclostrobin, Sintofen, Spiroxamin, Tebuconazol und Triclopyr sowie deren Salzen, Estern und anderen Derivaten oder einer Kombination der vorgenannten Wachstumsregler.

Bei besonderen Ausführungsformen ist der Wachstumsregler ausgewählt unter Chlormequat, Ethephon, Mepiquat, Trinexapac, Prohexadion, sowie deren Salzen, Estern und anderen Derivaten oder einer Kombination der vorgenannten Wachstumsregler.

Die vorliegende Erfindung umfasst auch solche Ausführungsvarianten, bei denen der konventionelle Anwendungsplan zwei oder mehr Spritzungen mit Wachstumsregler umfasst.

Bei bestimmten Ausführungsformen der Erfindung umfasst der konventionelle Anwendungsplan demnach weiterhin
eine vierte Menge pro Ackerflächeneinheit des ersten Wachstumsreglers oder eines zweiten Wachstumsreglers für eine zweite Spritzung der Kulturpflanze und
einen Zeitpunkt für die zweite Spritzung,
wobei der modifizierte Anwendungsplan weiterhin umfasst
eine fünfte Menge pro Ackerflächeneinheit des ersten Wachstumsreglers oder des zweiten Wachstumsreglers für die zweite Spritzung, wobei die fünfte Menge pro Ackerflächeneinheit kleiner ist als die vierte Menge und
einen Zeitpunkt für die zweite Spritzung.

Bei den Ausführungsvarianten, bei denen der konventionelle Anwendungsplan mehr als zwei Spritzungen mit Wachstumsregler umfasst, sieht der modifizierte Anwendungsplan vorzugsweise einen modifizierten Zeitpunkt zumindest für die erste Spritzung oder die zweite Spritzung vor.

Bei bestimmten Ausführungsformen liegt der Zeitpunkt für die zweite Spritzung nach dem Zeitpunkt der ersten Spritzung. Bei alternativen Ausführungsformen liegt der Zeitpunkt für die zweite Spritzung vor dem Zeitpunkt der ersten Spritzung.

Bei manchen Ausführungsformen der Erfindung ist die fünfte Menge des ersten Wachstumsreglers oder des zweiten Wachstumsreglers gleich Null bei anderen größer als Null.

Bei manchen Ausführungsformen der Erfindung ist der Zeitpunkt für das Ausbringen des Silizium enthaltenden Stoffgemischs gleich dem Zeitpunkt für die erste Spritzung. Bei anderen Ausführungsformen wird das Silizium enthaltende Stoffgemisch und zumindest der erste oder der zweite Wachstumsregler gemischt und in einem Arbeitsgang gespritzt.

Bei bestimmten Ausführungsformen der Erfindung umfasst der konventionelle Anwendungsplan weiterhin
eine sechste Menge pro Ackerflächeneinheit eines Silizium enthaltenden Stoffgemischs für ein Ausbringen und
einen Zeitpunkt für das Ausbringen des Silizium enthaltenden Stoffgemischs mit der sechsten Menge pro Ackerflächeneinheit.

Vorzugsweise handelt es sich bei dem in einer sechsten Menge ausgebrachten Silizium enthaltenden Stoffgemisch um ein flüssiges Silizium enthaltendes Stoffgemisch, das durch Spritzung ausgebracht wird.

Unter einem "Silizium enthaltenden Stoffgemisch" ist im Zusammenhang mit der vorliegenden Erfindung ein Stoffgemisch zu verstehen, das Silizium in einer von Pflanzen resorbierbaren Form bereitstellt.

Erfindungsgemäß wird ein Silizium enthaltendes flüssiges Stoffgemisch eingesetzt, dass für eine Spritzung geeignet ist. Hierfür muss das Silizium enthaltende flüssige Stoffgemisch durch entsprechende Spritzdüsen versprüht werden können. Bei bestimmten Ausführungsformen handelt es sich bei dem Silizium enthaltenden flüssigen Stoffgemisch um eine Suspension von Silizium enthaltenden Feststoffpartikeln oder um eine Lösung von löslichen Siliziumverbindungen oder um ein flüssiges Stoffgemisch indem sowohl Silizium enthaltende Feststoffpartikel suspendiert sind als auch lösliche Siliziumverbindungen gelöst sind. Vorzugsweise sind die Silizium enthaltenden Feststoffpartikel und/oder die löslichen Siliziumverbindungen in wässriger Suspension bzw. Lösung suspendiert bzw. gelöst.

Bei bestimmten Ausführungsformen liegt die Konzentration der Silizium enthaltenden Feststoffpartikel und/oder der löslichen Siliziumverbindungen jeweils für sich genommen oder in Summe bezogen auf das Gesamtgewicht des flüssigen Stoffgemisches im Bereich von 0,1 bis 50,0 Gew.-%, besonders bevorzugt im Bereich von 0,1 bis 30,0 Gew.-% und noch bevorzugter im Bereich von 0,1 bis 25,0 Gew.-%. Bei bestimmten Ausführungsformen liegt die Untergrenze bei wenigstens 0,2 Gew.-%, wenigstens 0,5 Gew.-% oder wenigstens 1,0 Gew.-%.

Bei bestimmten Ausführungsformen wird das flüssige Silizium enthaltende Stoffgemisch mit den oben angegebenen Konzentrationen unmittelbar vor der Spritzung um das 10-fache bis 1500-fache verdünnt, vorzugsweise um das 10-fache bis 1000-fache, besonders bevorzugt um das 10-fache bis 500-fache.

Unter einem "Silizium enthaltenden Stoffgemisch" ist im Zusammenhang mit der vorliegenden Erfindung ein Stoffgemisch zu verstehen, das Silizium in einer von der Kulturpflanze resorbierbaren Form bereitstellt, vorzugweise in einer über die Wurzel und/oder das Blatt resorbierbaren Form bereitstellt. Besonders bevorzugt handelt es sich um ein Stoffgemisch, das Silizium in einer von der Kulturpflanze über das Blatt resorbierbaren Form bereitstellt.

Vorzugsweise liegt der pH-Wert des Silizium enthaltenden flüssigen Stoffgemisches im Bereich von 2 bis 10, besonders bevorzugt im Bereich von 3 bis 9, noch bevorzugter im Bereich von 4 bis 8 und ganz besonders bevorzugt im Bereich von 5 bis 7.

Bei bestimmten Ausführungsformen wird das Silizium enthaltende Stoffgemisch in Form von Silizium enthaltendem Gesteinsmehl bereitgestellt, das silikatische Mineralien und/oder Siliziumdioxid enthält oder hieraus besteht. Vorzugsweise wird das Gesteinsmehl in Form einer wässrigen Suspension des Gesteinsmehls bereitgestellt.

Vorzugsweise ist das Silizium enthaltende Gesteinsmehl ausgewählt unter Tonmineralen, Schichtsilikaten und Gerüstsilikaten, wie z.B. Glimmer, Talk, Serpentin, Vermiculit, Muskovit, Bentonit, Zeolith und Kaolinit, oder unter silikatischen Vulkaniten, wie z.B. Pikrit, Basalt, Andesit, Dazit und Granit. Der Siliziumanteil in dem Silizium enthaltenden Gesteinsmehl liegt (berechnet als SiO₂) vorzugsweise im Bereich von 40 bis 80 Gew.-%, noch bevorzugter im Bereich von 60 bis 80 Gew.-%.

Bei bestimmten Ausführungsformen wird das Silizium enthaltende Stoffgemisch in Form von Silikaten und/oder in Form von Monokieselsäure und/oder in Form einer Polykieselsäure bereitgestellt.

Vorzugsweise handelt es sich bei den Silikaten um Salze und Ester der Ortho-Kieselsäure (Si(OH)₄) und deren Kondensate. Beispiele für Salze der Ortho-Kieselsäure sind Alkali- und Erdalkalisilikate. Beispiele für Ester der Ortho-Kieselsäure sind C₁-C₁₂-Alkylorthosilikate. Vorzugsweise handelt es sich hierbei um wasserlösliche Silikate.

Bei Ausführungsformen mit Monokieselsäure und/oder Polykieselsäure liegt diese vorzugsweise stabilisiert vor, bevorzugt stabilisiert mit Polysacchariden, Polyalkoholen, Huminsäuren, Fulvinsäuren, Makro- oder Mikronährstoffen, organischen Säuren, Salzen organischer Säuren, Esther organischer Säuren, Carbonsäuren, Chinolin, anorganischen Säuren, Algen, Melasse, Betain, Pflanzenextrakten, Aminosäuren oder einer Kombination davon.

In bestimmten Ausführungsformen führt die Spritzung mit der Silizium enthaltenden Substanz gemäß dem modifizierten Anwendungsplan zusätzlich zu einem verbesserten Schutz der Kulturpflanze gegenüber Trockenheit, einem verbesserten Auswinterungsschutz der Kulturpflanze, einem verbesserten Hitzeschutz der Kulturpflanze, einer Qualitätssteigerung der Kulturpflanze, insbesondere zu einem erhöhten Proteingehalt, einer verbesserten Haltbarkeit oder einer verbesserten Transport- und/oder Lagerfähigkeit. Vorzugsweise wird bei diesen Ausführungsformen das Silizium in Form von Monokieselsäure und/oder in Form einer Polykieselsäure bereitgestellt wird, besonders bevorzugt wird das Silizium bei diesen Ausführungsformen in Form von stabilisierter Monokieselsäure und/oder in Form einer stabilisierten Polykieselsäure bereitgestellt.

Je nachdem in welcher Form Silizium hier zum Einsatz kommt, sind unterschiedliche Mengen an eingesetztem Silizium enthaltendem Stoffgemisch erforderlich.

Bei den Ausführungsformen, bei denen das Silizium enthaltende Stoffgemisch in Form von Silikaten, in Form von Monokieselsäure oder in Form einer Polykieselsäure bereitgestellt wird, beträgt in dem das Silizium enthaltenden Stoffgemisch die Konzentration von Silizium, vorzugsweise berechnet als SiO₂, 1 g pro Hektar oder mehr, vorzugsweise 25 g pro Hektar oder mehr, vorzugsweise von 50 g pro Hektar oder mehr und besonders bevorzugt von 100 g pro Hektar oder mehr. Bei bestimmten Ausführungsformen liegt die eingesetzte Menge bei weniger als 5000 g pro Hektar, bei weniger als 1000 g pro Hektar, bei weniger als 750 g pro Hektar oder gar bei weniger als 500 g pro Hektar.

Bei den Ausführungsformen, bei denen das Silizium enthaltende Stoffgemisch in Form von Silizium enthaltendem Gesteinsmehl, silikatischen Mineralien und/oder Siliziumdioxid bereitgestellt wird, liegt die eingesetzte Menge vorzugsweise bei 0,001 bis 50 kg pro Hektar.

Bei bestimmten Ausführungsformen der Erfindung enthält das Silizium enthaltende Stoffgemisch zusätzlich noch mindestens einen Spurennährstoff, vorzugsweise ausgewählt aus einer Gruppe bestehend aus Eisen, Kupfer, Mangan, Bor, Molybdän, Nickel und Zink.

Vorzugsweise ist der mindestens eine Spurennährstoff in einer Menge von 1 g pro Hektar oder mehr, vorzugsweise von 5 g pro Hektar oder mehr, vorzugsweise von 10 g pro Hektar oder mehr enthalten.

Bei bevorzugten Ausführungsformen enthält das Stoffgemisch eine Kombination der folgenden Spurennährstoffe
- Kupfer in einer Menge von 1 g bis 250 g pro Hektar,
- Mangan in einer Menge von 1 g bis 250 g pro Hektar und/oder
- Zink in einer Menge von 1 g bis 250 g pro Hektar.

Bei bevorzugten Ausführungsformen enthält das Stoffgemisch eine Kombination der folgenden Spurennährstoffe
- Kupfer in einer Menge von 5 g bis 20 g pro Hektar,
- Mangan in einer Menge von 5 g bis 20 g pro Hektar und/oder
- Zink in einer Menge von 10 g bis 30 g pro Hektar.

Dabei ist bei bevorzugten Ausführungsformen der Gehalt an Zink größer als der Gehalt an Kupfer und/oder Mangan, vorzugsweise jeweils größer als der Gehalt an Mangan und der Gehalt an Kupfer.

In bestimmten Ausführungsformen, bei welchen das Silizium in Form von Monokieselsäure und/oder in Form einer Polykieselsäure bereitgestellt wird, insbesondere bei welchen das Silizium in Form von stabilisierter Monokieselsäure und/oder in Form einer stabilisierten Polykieselsäure bereitgestellt wird und welche zumindest Kupfer, Mangan oder Zink als Spurennährstoffe enthalten führt die Spritzung mit der Silizium enthaltenden Substanz gemäß dem modifizierten Anwendungsplan zu zumindest einem verbesserten Schutz der Kulturpflanze gegenüber Trockenheit, einem verbesserten Auswinterungsschutz der Kulturpflanze, einem verbesserten Hitzeschutz der Kulturpflanze, einer Qualitätssteigerung der Kulturpflanze, insbesondere zu einem erhöhten Proteingehalt, einer verbesserten Haltbarkeit oder einer verbesserten Transport- und/oder Lagerfähigkeit.

Bei bestimmten Ausführungsformen ist es insbesondere bevorzugt, wenn der mindestens eine Spurennährstoff in Form eines Chelats, vorzugsweise in Form eines Chelats von Ethylendiamintetraessigsäure, vorliegt.

Bei besonders bevorzugten Ausführungsformen enthält das Stoffgemisch eine Kombination der folgenden Spurennährstoffe, jeweils in chelatisierter Form
- Kupfer in einer Menge von 10 g pro Hektar,
- Mangan in einer Menge von 10 g pro Hektar und/oder
- Zink in einer Menge von 15 g pro Hektar.

Wie eingangs bereits erwähnt wurde, ist der Einsatz von Wachstumsreglern von vielen Faktoren abhängig, wie z.B. Pflanzensorte, Nährstoffversorgung, Wasserversorgung, Bodenart und Witterung. Vor diesem Hintergrund erfolgt das Bestimmen des konventionellen Anwendungsplans zweckmäßigerweise in Abhängigkeit von einem oder mehreren der folgenden Parameter, die ausgewählt sind aus einer Gruppe bestehend aus einer Art der Kulturpflanze, einer Sorte der Nutzpflanze, einer Bestandsdichte der Kulturpflanze auf der Ackerfläche, einer Bodenart des Ackers, einer Menge pro Ackerflächeneinheit einer Stickstoffdüngung des Ackers, einer Mischung des ersten oder des zweiten Wachstumsreglers mit einem weiteren Wachstumsregler, einem Schadorganismen bekämpfenden Pflanzenschutzmittel (z.B. Herbizid, Fungizid, Insektizid, Nematizid, Rodentizid) oder mit einem Düngemittel, einer zu erwartenden Stickstoff-Nachlieferung in dem Boden des Ackers, einem Entwicklungsstadium der Kulturpflanze, einer Wasserversorgung des Ackers, einem Witterungsverlauf vor dem Zeitpunkt für die erste Spritzung, einem erwarteten Witterungsverlauf nach dem Zeitpunkt für die erste Spritzung und einer zu erwartenden Strahlungsintensität der Sonne nach dem Zeitpunkt der ersten Spritzung, einen Hinweis in der Gebrauchsanleitung des ersten und/oder zweiten Wachstumsregler, einer örtlichen Beratung oder ökonomischen Erwägung oder einer Kombination davon.

Bei manchen Ausführungsformen der Erfindung erfolgt wenigstens eine Spritzung mit dem Silizium enthaltenden Stoffgemisch zu einem Zeitpunkt, zu dem die Kulturpflanze noch keine Blätter ausgebildet hat. Bei manchen Ausführungsformen der Erfindung erfolgt wenigstens eine Spritzung der Kulturpflanze mit dem Silizium enthaltenden Stoffgemisch zu einem Zeitpunkt, zu dem die Kulturpflanze bereits Blätter ausgebildet hat. Bei bestimmten Ausführungsformen der Erfindung erfolgt wenigstens eine Spritzung mit dem Silizium enthaltenden Stoffgemisch zu einem Zeitpunkt, zu dem die Kulturpflanze noch keine Blätter ausgebildet hat, und eine weitere Spritzung mit dem Silizium enthaltenden Stoffgemisch zu einem Zeitpunkt, zu dem die Kulturpflanze bereits Blätter ausgebildet hat. Bei den Ausführungsformen, bei denen wenigstens eine Spritzung der Kulturpflanze mit dem Silizium enthaltenden Stoffgemisch zu einem Zeitpunkt erfolgt, zu dem die Kulturpflanze bereits Blätter ausgebildet hat, erfolgt die Spritzung vorzugsweise gezielt auf die Bereiche, in denen die Kulturpflanze ihre Blätter ausgebildet hat.

### AUSFÜHRUNGSBEISPIELE

### Versuch 1

Beim Anbau einer Kultur von Winterweizen wurden durch Anwendung von erfindungsgemäß modifizierten Anwendungsplänen im Vergleich zu dem entsprechenden konventionellen Anwendungsplan die in der nachfolgenden Tabelle angegebenen höheren Erträge erzielt. Der Versuchsanbau erfolgte nach GEP-Standard gemäß der Verordnung (EU) Nr. 284/2013 und der Pflanzenschutzmittelverordnung.

| **Variante** | **EC 21-29 (Frühjahr)** | **EC 31/32** | **Ertrag in dt/ha** |
|---|---|---|---|
| Konventioneller Anwendungsplan | | 360 g pro Hektar Chlormequatchlorid + 75 g pro Hektar Trinexapac-ethyl | 104,7 |
| Modifizierter Anwendungsplan 1 | | 50 g pro Hektar Trinexapac-ethyl + 100 g pro Hektar Silizium (SiO₂), 10g pro Hektar Kupfer als EDTA-Chelat, 10 g pro Hektar Mangan als EDTA-Chelat, 15 g pro Hektar Zink als EDTA-Chelat | 105,4 |
| Modifizierter Anwendungsplan 2 | 100 g pro Hektar Silizium (SiO₂), 10g pro Hektar Kupfer als EDTA-Chelat, 10 g pro Hektar Mangan als EDTA-Chelat, 15 g pro Hektar Zink als EDTA-Chelat | 50 g pro Hektar Trinexapac-ethyl + 100 g pro Hektar SiO₂, 10g pro Hektar Kupfer als EDTA-Chelat, 10 g pro Hektar Mangan als EDTA-Chelat, 15 g pro Hektar Zink als EDTA-Chelat | 106,2 |

### Versuch 2

Beim Anbau einer Kultur von Winterweizen wurden durch Anwendung von erfindungsgemäß modifizierten Anwendungsplänen im Vergleich zu dem entsprechenden konventionellen Anwendungsplan die in der nachfolgenden Tabelle angegebenen höheren Erträge erzielt. Der Versuchsanbau erfolgte nach GEP-Standard gemäß der Verordnung (EU) Nr. 284/2013 und der Pflanzenschutzmittelverordnung.

| **Variante** | **EC 13-21 (Herbst)** | **EC 21-29 (Frühjahr)** | **EC 31132** | **EC 37/39** | **Ertrag in dt/ha** |
|---|---|---|---|---|---|
| Konventioneller Anwendungsplan | | 504 g pro Hektar Chlormequatchlorid | 288 g pro Hektar Chlormequatchlorid + 75 g pro Hektar Trinexapac-ethyl | 120 g pro Hektar Mepinquatchlorid, 20 g pro Hektar Prohexadion-Calcium | 78,5 |
| Modifizierter Anwendungsplan 1 | 100 g pro Hektar Silizium (SiO₂), 10 g pro Hektar Kupfer als EDTA-Chelat, 10 g pro Hektar Mangan als EDTA-Chelat, 15 g pro Hektar Zink als EDTA-Chelat | | 50 g pro Hektar Trinexapac-ethyl + 100 g pro Hektar Silizium (SiO₂), 10 g pro Hektar Kupfer als EDTA-Chelat, 10 g pro Hektar Mangan als EDTA-Chelat, 15 g pro Hektar Zink als EDTA-Chelat | 60 g pro Hektar Mepinquatchlorid, 10 g pro Hektar Prohexadion-Calcium + 100 g pro Hektar Silizium (SiO₂), 10 g pro Hektar Kupfer als EDTA-Chelat, 10 g pro Hektar Mangan als EDTA-Chelat, 15 g pro Hektar Zink als EDTA-Chelat | 83,2 |
| Modifizierter Anwendungsplan 2 | | 100 g pro Hektar Silizium (SiO₂), 10 g pro Hektar Kupfer als EDTA-Chelat, 10 g pro Hektar Mangan als EDTA-Chelat, 15 g pro Hektar Zink als EDTA-Chelat | 50g Trinexapac-ethyl + 100 g pro Hektar Silizium (SiO₂), 10 g pro Hektar Kupfer als EDTA-Chelat, 10 g pro Hektar Mangan als EDTA-Chelat, 15 g pro Hektar Zink als EDTA-Chelat | 60 g pro Hektar Mepinquatchlorid, 10 g pro Hektar Prohexadion-Calcium + 100 g pro Hektar Silizium (SiO₂), 10 g pro Hektar Kupfer als EDTA-Chelat, 10 g pro Hektar Mangan als EDTA-Chelat, 15 g pro Hektar Zink als EDTA-Chelat | 81,7 |

## Patentansprüche

1. Verfahren zum Verbessern der Standfestigkeit einer Kulturpflanze auf einer Ackerfläche mit den Schritten
Bestimmen eines konventionellen Anwendungsplans, welcher umfasst
eine erste Menge pro Ackerflächeneinheit eines ersten Wachstumsreglers für eine erste Spritzung der Kulturpflanze und
einen Zeitpunkt für die erste Spritzung,
Modifizieren des konventionellen Anwendungsplans, um einen modifizierten Anwendungsplan zu erhalten, wobei der modifizierte Anwendungsplan umfasst
eine zweite Menge pro Ackerflächeneinheit des ersten Wachstumsreglers für die erste Spritzung, wobei die zweite Menge pro Ackerflächeneinheit kleiner als die erste Menge pro Ackerflächeneinheit ist,
einen Zeitpunkt für die erste Spritzung,
eine dritte Menge pro Ackerflächeneinheit eines Silizium enthaltenden flüssigen Stoffgemischs für eine Spritzung und
einen Zeitpunkt für die Spritzung der dritten Menge pro Ackerflächeneinheit des Silizium enthaltenden Stoffgemischs, und
Behandeln der Kulturpflanze auf der Ackerfläche nach dem modifizierten Anwendungsplan.

2. Verfahren nach dem vorhergehenden Anspruch, wobei der Wachstumsregler ein natürliches Phytohormon oder dessen synthetisches Analogon ist oder ein Aktivator oder Inhibitor eines natürlichen Phytohormon ist oder ein Stoff ist, der in den pflanzlichen Phytohormon-Stoffwechsel regulierend eingreift.

3. Verfahren nach dem vorhergehenden Anspruch, wobei die zweite Menge pro Ackerflächeneinheit des ersten Wachstumsreglers 75 % oder weniger, vorzugsweise 50 % oder weniger und besonders bevorzugt 25 % oder weniger der ersten Menge pro Ackerflächeneinheit des ersten Wachstumsreglers beträgt.

4. Verfahren nach einem der vorhergehenden Ansprüche, wobei der konventionelle Anwendungsplan weiterhin umfasst
eine vierte Menge pro Ackerflächeneinheit des ersten Wachstumsreglers oder eines zweiten Wachstumsreglers für eine zweite Spritzung der Kulturpflanze und
einen Zeitpunkt für die zweite Spritzung,
wobei der modifizierte Anwendungsplan weiterhin umfasst
eine fünfte Menge pro Ackerflächeneinheit des ersten Wachstumsreglers oder des zweiten Wachstumsreglers für die zweite Spritzung, wobei die fünfte Menge pro Ackerflächeneinheit kleiner ist als die vierte Menge und
einen Zeitpunkt für die zweite Spritzung.

5. Verfahren nach dem vorhergehenden Anspruch, wobei die fünfte Menge pro Ackerflächeneinheit des ersten Wachstumsreglers oder des zweiten Wachstumsreglers Null ist.

6. Verfahren nach einem der vorhergehenden Ansprüche, wobei der Zeitpunkt für das Ausbringen des Silizium enthaltenden Stoffgemischs gleich dem Zeitpunkt für die erste Spritzung ist.

7. Verfahren nach einem der vorhergehenden Ansprüche, wobei der modifizierte Anwendungsplan umfasst
eine sechste Menge pro Ackerflächeneinheit eines Silizium enthaltenden Stoffgemischs für ein Ausbringen und
einen Zeitpunkt für das Ausbringen des Silizium enthaltenden Stoffgemischs mit der sechsten Menge pro Ackerflächeneinheit.

8. Verfahren nach einem der vorhergehenden Ansprüche, wobei das Silizium enthaltende Stoffgemisch Silizium in Form von Gesteinsmehl, vorzugsweise von Gesteinsmehl in einer Suspension, enthält oder Silizium in Form eines Silikats enthält oder Silizium in Form von Monokieselsäure oder einer Polykieselsäure enthält.

9. Verfahren nach einem der vorhergehenden Ansprüche, wobei in dem das Silizium enthaltenden Stoffgemisch die Konzentration von Silizium, vorzugsweise berechnet als SiO₂, 25 g pro Hektar oder mehr, vorzugsweise von 50 g pro Hektar oder mehr und besonders bevorzugt von 100 g pro Hektar oder mehr beträgt.

10. Verfahren nach einem der vorhergehenden Ansprüche, wobei das Silizium enthaltende Stoffgemisch mindestens einen Spurennährstoff, vorzugsweise ausgewählt aus einer Gruppe bestehend aus Eisen, Kupfer, Mangan, Bor, Molybdän, Nickel und Zink enthält.

11. Verfahren nach dem vorhergehenden Anspruch, wobei das Stoffgemisch den mindestens einen Spurennährstoff in einer Menge von 1 g pro Hektar oder mehr, vorzugsweise in einer Menge von 5 g pro Hektar oder mehr, vorzugsweise 10 g pro Hektar oder mehr enthält.

12. Verfahren nach Anspruch 10 oder 11, wobei der mindestens eine Spurennährstoff in Form eines Chelats, vorzugsweise in Form eines Chelats von Ethylendiamintetraessigsäure, vorliegt.

13. Verfahren nach einem der vorhergehenden Ansprüche, wobei der Wachstumsregler ausgewählt ist aus einer Gruppe bestehend aus Indol-3-essigsäure, 4-(Indol-3-yl)buttersäure, 1-Naphthylessigsäure, Gibberellinsäure, Dichlorprop, 2,4,5-Trichlorphenoxyessigsäure, 2,4-Dichlorphenoxyessigsäure, Maleinsäurehydrazid, Tecnazen, 3-Chlorphenoxyessigsäure, Kinetin, 6-Benzyladenin, Thidiazuron, Gibberellinen, Carbaryl, 4-Chlorphenoxyessigsäure, Chlorpropham, Chlormequatchlorid, Ethephon, Abscisinsäure, Abscisin II, Chlorflurenol, Daminozid, Ancymidol, Mepiquatchlorid, Dimethipin, Chlorphoniumchlorid, Dikegulac, Mefluidid, Ethylchlozat, Flumetralin, Brassinosteroiden, pflanzenwachstumsregulierenden Oligosacchariden, Uniconazol-P, Forchlorfenuron, Paclobutrazol, Cyanwasserstoff, Flurprimidol, Inabenfid, Folpet, Trinexapac, Cyclanilid, Prohexadion-Calcium, 1-Methylcyclopropen, Jasmonaten, Aminoethoxyvinylglycin, pflanzenwachstumsregulierenden Monoterpenen, Phospholipiden und Trans-2-ketonen, 1,4-Dimethylnaphthalin, 1-Decanol, 4-(Indol-3-yl)buttersäure, Bixafen, Boscalid, Difenoconazol, Ethylen, Fluoxastrobin, Fluxapyroxad, Metamitron, Metconazol, Natrium-5-nitroguaiacolat, Natrium-o-nitrophenolat, Natrium-p-nitrophenolat, Prochloraz, Prothioconazol, Pyraclostrobin, Sintofen, Spiroxamin, Tebuconazol und Triclopyr sowie deren Salzen, Estern und anderen Derivaten oder einer Kombination der vorgenannten Wachstumsregler.

14. Verfahren nach einem der vorhergehenden Ansprüche, wobei das Bestimmen des konventionellen Anwendungsplans in Abhängigkeit eines Parameters erfolgt, der ausgewählt ist aus einer Gruppe bestehend aus einer Art der Kulturpflanze, einer Sorte der Kulturpflanze, einer Bestandsdichte der Kulturpflanze auf der Ackerfläche, einer Bodenart des Ackers, einer Menge pro Ackerflächeneinheit einer Stickstoffdüngung des Ackers, einer Mischung des ersten oder des zweiten Wachstumsreglers mit einem Pflanzenschutzmittel oder mit einem Düngemittel, einer zu erwartenden Stickstoff-Nachlieferung in dem Boden des Ackers, einem Entwicklungsstadium der Kulturpflanze, einer Wasserversorgung des Ackers, einem Witterungsverlauf vor dem Zeitpunkt für die erste Spritzung, einem erwarteten Witterungsverlauf nach dem Zeitpunkt für die erste Spritzung und einer zu erwartenden Strahlungsintensität der Sonne nach dem Zeitpunkt der ersten Spritzung, einen Hinweis in der Gebrauchsanleitung des ersten und/oder zweiten Wachstumsreglers, einer örtlichen Beratung oder ökonomischen Erwägung oder einer Kombination davon.
